# EUROPÄISCHE PATENTSCHRIFT

(11) **EP 2 647 511 B1**
(45) Veröffentlichungstag und Bekanntmachung des Hinweises auf die Patenterteilung: **04.03.2015**
(21) Anmeldenummer: 13001759.3
(22) Anmeldetag: 05.04.2013
(51) Int. Cl.: B60C 23/00, F16C 41/00

(54) **Drehdurchführung mit Gleitsegment**
Rotary feed-through with a sliding segment
Passage tournant avec patin

(30) Priorität: 05.04.2012 DE 102012006901
(43) Veröffentlichungstag der Anmeldung: 09.10.2013
(73) Patentinhaber: VOSS Normalien GmbH & Co. KG, 59557 Lippstadt (DE)
(72) Erfinder: Schürmann, Erich, Dr., 49324 Sendenhorst (DE)
(74) Vertreter: Roche, von Westernhagen & Ehresmann

(56) Entgegenhaltungen:
- DE-C1- 3 444 850
- DE-U1-202010 008 453

## Beschreibung

Die Erfindung betrifft eine nachrüstbare, ringförmige Drehdurchführung mit einem besonders geringen Reibmoment insbesondere für Traktoren, die mit einer Reifendruckverstellanlage ausgerüstet sind. Die Drehdurchführung kann außerhalb des Achskörpers auf der Innenseite der Traktorräder angebracht werden und erübrigt somit eine Leitungsführung über die Kotflügel.

### DER STAND DER TECHNIK

Bei luftbereiften Radfahrzeugen mit einer Reifendruckverstellanlage und einer fahrzeugseitigen Druckluftversorgung ist an den betroffenen Rädern je eine Drehdurchführung erforderlich. Eine nachrüstbare Drehdurchführung kann sowohl außen am Rad als auch innen am Rad installiert werden. Ist die Drehdurchführung außen am Rad installiert, so ist eine Leitungsführung über dem Kotflügel erforderlich. Wird die Drehdurchführung auf der Innenseite des Rades installiert, so kann die Drehdurchführung in den Achskörper integriert werden oder die Drehdurchführung wird ringförmig, außerhalb des Achskörpers installiert. Eine Drehdurchführung innerhalb des Achskörpers ist mit vertretbarem Aufwand nicht nachrüstbar. Für eine Nachrüstung der Traktorräder mit einer Drehdurchführung auf der Innenseite der Räder wird die Drehdurchführung vorteilhaft ringförmig ausgeführt, damit die Drehdurchführung außerhalb des Achskörpers angebracht werden kann. Ringförmige Drehdurchführungen sind bisher nicht üblich, da es trotz immenser, möglicher Vorteile, noch keine, in allen Belangen geeignete, Konstruktion gibt. Insbesondere die Reibmomente sind bisher deutlich zu hoch.

Übliche, ringförmige Drehdurchführungen besitzen prinzipiell zwei konzentrisch zueinander drehbar gelagerte Ringe, die einerseits den Statorring und andererseits den Rotorring bilden. Der Statorring ist drehfest mit dem Fahrzeugkörper verbunden und der Rotorring dreht sich gemeinsam mit dem Rad. Zwischen dem Statorring und dem Rotorring befindet sich mindestens ein, mit Dichtungen begrenzter, Ringkanal, wobei der Rotorring eine Leitungsverbindung zwischen dem Ringkanal und dem Reifen aufweist und der Statorring eine Leitungsverbindung zwischen dem Ringkanal und der fahrzeugseitige Luftversorgung aufweist. Neben den Einleiteranlagen mit nur einem Ringkanal je Drehdurchführung werden in zunehmendem Maße Zweileiteranlagen verwendet, die zwei Ringkanäle je Drehdurchführung besitzen. Bei den Zweileiteranlagen dient eine erste Leitung als Versorgungsleitung und eine zweite Leitung als Steuerleitung, die einem geringeren Querschnitt aufweisen kann. Sind bei einer Einleiteranlage zwei Dichtungen erforderlich, so sind bei einer Zweileiteranlage drei oder, bei einseitig wirkenden Dichtungen, vier Dichtungen erforderlich. Zur Erhöhung der Lebensdauer der Drehdurchführungen und der Betriebssicherheit der Reifendruckverstellanlage werden in zunehmendem Maße die Reifendruckverstellanlagen mit speziellen Schaltventilen an den Rädern ausgestattet, welche die Drehdurchführungen nur beim Verstellvorgang mit Luftdruck belasten. Trotzdem ist die Lebensdauer der Drehdurchführungen mit größeren Durchmessern und konventionellen Dichtungen sehr kritisch zu beurteilen, da mit größer werdenden Durchmessern neben den Gleitgeschwindigkeiten insbesondere die Reibkräfte stark ansteigen.

Die bekannten ringförmigen Drehdurchführungen haben einen geringen Innendurchmesser und werden nur innerhalb der Radnaben verbaut, was einen unangemessen hohen Montageaufwand bei einer Reparatur oder der Wartung der Drehdurchführung verursacht, da die Radnabe zerlegt werden muss.

Eine ringförmige Drehdurchführung mit einem Innendurchmesser von bis zu ca. 500 mm und einer internen Lagerung des Statorrings gegenüber dem Rotorring, ließe sich als selbsttragende Drehdurchführung auf der Innenseite des Rades außerhalb des Achsgehäuses verbauen und auch nachrüsten. Gleichzeitig dürfte dabei jedoch die axiale Breite der Drehdurchführung nicht größer sein als ca. 80 mm, um nicht mit Fahrwerksteilen zu kollidieren. Die Differenz zwischen dem äußeren und dem inneren Durchmesser sollte nicht mehr als ca. 120 mm betragen, da der Freiraum vom Innendurchmesser der Felge begrenzt wird.

### DIE AUFGABENSTELLUNG

Es gilt eine ringförmige Drehdurchführung mit einer Querschnittfläche von ca. 80 mm mal ca. 60 mm mit einer integrierten Wälzlagerung für eine Zweileiter-Reifendruckverstellanlage zu realisieren, bei der die Versorgungsleitung einen Durchmesser von ca. 10 mm und die Steuerleitung einen Durchmesser von mindestens 5 mm aufweisen sollte. Dabei sollten die Dichtungen so gestaltet werden, dass sich trotz einer höheren Gleitgeschwindigkeit von bis zu 5 m/s auf Grund des größeren Durchmessers, sowohl unter Druck als auch im drucklosen Zustand, eine möglichst geringe Beanspruchung der Dichtungen ergibt. Die Drehdurchführung sollte insbesondere bei den Reifendruckverstellanlagen eingesetzt werden, bei denen die Drehdurchführung nur während des Verstellvorgangs unter Druck steht und die Verstellung des Reifendruckes während der Fahrt erfolgt. Für die Beanspruchung der Dichtungen gibt es damit zwei wesentliche Betriebszustände, das fahrende Fahrzeug und das fahrende Fahrzeug während des Verstellvorgangs. Darüber hinaus sollen die Dichtungen und die Einzelteile des Gehäuses aus preisgünstigen Halbzeugen gefertigt werden können, um möglichst günstige Herstellkosten zu erreichen. Im Interesse einer geringen Lagerbelastung der Lagerung zwischen dem Statorring und dem Rotorring, sollten der Statorring und der Rotorring radial übereinander liegen (Rohr in Rohr) und nicht axial nebeneinander angeordnet (Scheibe an Scheibe) sein. Nur so kann die Lagerbelastung auf Grund des Innendruckes theoretisch zu Null reduziert werden, was eine vereinfachte, kostengünstige Lagerung möglich macht. Die tangential, zylindrisch verlaufende Trennfuge zwischen dem Statorring und dem Rotorring macht nebeneinander liegende Ringnuten und Dichtungen erforderlich, was sich negativ auf die Baubreite der gesamten Drehdurchführung auswirkt. Der Rotorring wird am Rad befestigt, stellt vorteilhaft den äußeren Ring der ringförmigen Drehdurchführung dar und bietet die erforderlichen Anschlüsse zum Steuerventil am Rad. Der Statorring ist vorteilhaft der innere Ring der ringförmigen Drehdurchführung, bietet die erforderlichen Leitungsverbindungen zum Fahrzeugkörper und ist drehfest mit dem Fahrzeugkörper verbunden.

Die wesentliche Problematik ist beim fahrenden Traktor das Reibmoment der Drehdurchführung unter Druck. Das Reibmoment ergibt sich aus der Dichtungsvorspannung, dem Betriebsdruck, der Größe der mit Druck beanspruchten Dichtungsfläche, dem Reibbeiwert zwischen Dichtung und Gegenfläche und dem Radius der Drehdurchführung. Wenn man bedenkt, dass die mit Druck beanspruchte Dichtungsfläche mindestens linear mit dem Durchmesser der Drehdurchführung steigt und der Hebelarm der Reibkräfte ebenso linear mit Durchmesser der Drehdurchführung steigt, so erkennt man eine quadratische Abhängigkeit des Reibmomentes vom Durchmesser der Drehdurchführung. Ebenso steigt die Gleitgeschwindigkeit mit dem Durchmesser der Drehdurchführung. Die ringförmige Drehdurchführung in DE 103 49 968 A1 arbeitet mit hydrostatisch teilweise entlasteten Dichtflächen, um die Reibung zu reduzieren. Die Anmeldung DE 10 2011 014025 zeigt eine ringförmige Drehdurchführung, bei der durch eine geeignete Abstützung der Dichtung die Druckbelastung in der Gleitfläche der Dichtung reduziert wird. Es bleibt jedoch die, in diesen Fällen quadratische Abhängigkeit des Reibmomentes vom Durchmesser der Drehdurchführung erhalten. In DE 3444850 ist eine Drehdurchführung für höhere Drücke mit einer linearen Abhängigkeit des Reibmoments vom Durchmesser dargestellt. Hier gleitet ein Gleitschuh entlang einer Kreisringfläche, die mit Ventilen besetzt ist.

Gebrauchsmuster DE 20 2010 008 453 U1 beschreibt eine herkömmliche Drehdurchführung.

Es gilt, die quadratische Abhängigkeit des Reibmomentes vom Durchmesser der Drehdurchführung zu eliminieren. Dabei kann hier vor dem Hintergrund der Anwendung bei Traktoren von einem geringen Maximaldruck von ca. 4 bar und von einer maximalen Gleitgeschwindigkeit von ca. 5 m/s ausgegangen werden. Ebenso kann die Lösung auf die weniger belastungsintensiven 2-Kanal-Reifenregelanlagen beschränkt werden.

### DIE LÖSUNG

Die Aufgabe soll erfindungsgemäß durch eine Drehdurchführung gelöst werden, die prinzipiell eine lineare Abhängigkeit des Reibmomentes vom Durchmesser der Drehdurchführung ergibt und nicht die übliche quadratische Abhängigkeit zeigt. Die druckbeanspruchte Dichtungsfläche ergibt mit dem Betriebsdruck die Normalkraft und die Reibkraft der Dichtung. Bei einer üblichen ringförmigen Dichtungsanordnung zwischen einem Statorring und einem Rotorring ergibt sich mindestens eine lineare Abhängigkeit der Reibkraft und damit eine quadratische Abhängigkeit des Reibmomentes vom Durchmesser der Dichtung.

Der erfindungsgemäße Ansatz hat zum Ziel, die Reibkräfte prinzipiell unabhängig vom Durchmesser der Drehdurchführung zu machen. Die Reibkraft ergibt sich stets aus der Größe der gleitenden Dichtungsfläche, die von der Vorspannung der Dichtung und vom Betriebsdruck belastet wird. Nimmt man nicht wie üblich, den vollen Dichtungsumfang als Gleitzone der Dichtung, sondern nur einen Teil des Dichtungsumfangs, so kann man die Reibkräfte insbesondere bei großen Durchmessern entsprechend auf ein Minimum reduzieren. Eine Gleitreibung an der Dichtung entsteht dann nicht am gesamten Umfang, sondern nur an einem Segment des Umfangs. Die Größe des Segmentes kann für alle Durchmesser gleich sein. Die Reibkraft wird damit vom Durchmesser der Drehdurchführung unabhängig. Das Reibmoment ist nur noch linear vom Durchmesser der Drehdurchführung abhängig.

Eine erfindungsgemäße Drehdurchführung, besteht beispielsweise aus einem äußeren Rotorring und einem inneren Statorring. Der Rotorring besitzt einen u-förmigen Ringkanal, der von zwei gegeneinander gerichteten Dichtungslippen an der Innenseite abgedichtet wird. Die beiden Dichtlippen berühren sich gegenseitig und dichten gegen einen Überdruck in dem u-förmigen Ringkanal. Diese Dichtflächen der beiden Dichtungen gilt es, partiell segmentiert am Umfang der Dichtungen zu öffnen. Dazu ist am Umfang des Statorrings ein Verdränger installiert, der die Dichtungslippen öffnet und schließt. Der Verdränger wird weiterhin als Gleitsegment bezeichnet. Das Gleitsegment hat die Form eines Schiffsrumpfes. Das Gleitsegment besitzt eine Bohrung für die Druckluft, damit eine Verbindung zwischen Rotorring und Statorring gegeben ist. Weil die beiden Dichtungen mit dem Rotorring fest verbunden sind und das Gleitsegment mit dem Statorring fest verbunden ist, tritt eine Gleitreibung nur zwischen den Dichtungen und dem Gleitsegment auf. Die Größe der Reibflächen ist damit vom Durchmesser der Drehdurchführung unabhängig. Die Dichtung des u-förmigen Ringkanals im Rotorring erfolgt einerseits unmittelbar durch die beiden Dichtungen und andererseits am Gleitsegment mittelbar zwischen jeder Dichtung und dem Gleitsegment.

Die erfindungsgemäße Drehdurchführung kann zur Reduzierung des Reibmomentes beim drucklosen Leerlaufbetrieb, welcher den überwiegenden Teil der Lebensdauer ausmacht, mit einem radial beweglichen Gleitsegment ausgestattet werden. Bei radial zurückgezogenem Gleitsegment hat das Gleitsegment keine Berührung mit den Dichtungen, das Reibmoment im Leerlauf ist damit gleich Null. Beim Start des Reifendruckverstellvorgangs fährt das Gleitsegment zwischen die beiden Dichtungen und stellt die Betriebsbereitschaft her.

### EIN AUSFÜHRUNGSBEISPIEL

Die zuvor beschriebene erfindungsgemäße Lösung soll in einem Beispiel ausführlich erläutert werden.

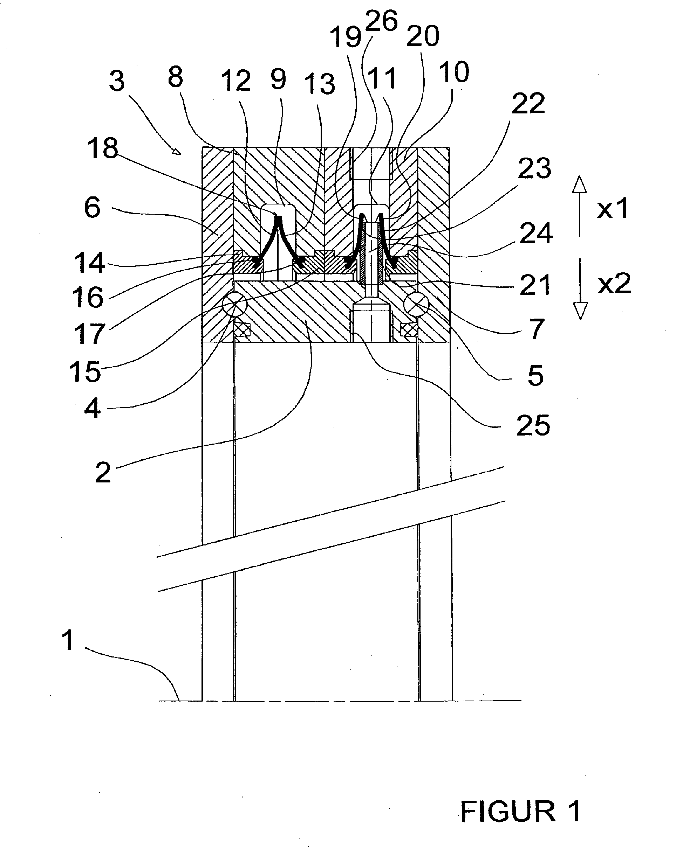

In **Figur 1** ist der Schnitt durch eine erfindungsgemäße 2-kanalige Drehdurchführung entlang der Drehachse 1 dargestellt. Die Drehdurchführung besteht aus zwei wesentlichen Komponenten, dem Statorring 2 und dem Rotorring 3. Der Rotorring kann aber ebenso als Statorring fungieren und umgekehrt, je nachdem welche Komponente festgesetzt wird. Der Rotorring 3 ist gegenüber dem Statorring 2 mit einem ersten Wälzlager 4 und einem zweiten Wälzlager 5 drehbar gelagert. Der Rotorring 3 besteht aus zwei Stück Seitenscheiben, einer erste Seitenscheibe 6 und einer zweiten Seitenscheibe 7 und aus einem ersten Ring 8 mit einem ersten u-förmigen Ringkanal 9 und einem zweiten Ring 10 mit einem zweiten u-förmigen Ringkanal 11. Die Dichtungen sind vorzugsweise aus einem Halbzeug gefertigt, sind Dichtungsscheiben und haben die Form einer Kreisringscheibe. An dem ersten Ring 8 sind die erste kreisringförmigen Dichtung 12 und die zweite kreisringförmige Dichtung 13 befestigt. Die Befestigung der ersten kreisringförmigen Dichtung 12 und der zweiten kreisringförmigen Dichtung 13 erfolgt hier am inneren Durchmesser der jeweiligen kreisringförmigen Dichtung mit jeweils einem Haltering, dem ersten Haltering 14 und dem zweiten Haltering 15. Zur Abdichtung und zur Fixierung ist jede der kreisringförmigen Dichtungen 12 und 13 mit je einem O-Ring, dem ersten O-Ring 16 und dem zweiten O-Ring 17 verbaut. Die Halteringe sind durch die Montage der Einzelteile des Statorrings 2 vollständig fixiert. Die kreisringförmigen Dichtungen 12 und 13 sind gegeneinander gerichtet und dichten durch gegenseitige Berührung im Bereich 18 den ersten u-förmigen Ringkanal 9 ab. Der zweite u-förmige Ringkanal 11 besitzt die dritte kreisringförmige Dichtung 19 und die vierte kreisringförmige Dichtung 20, deren Befestigung und deren Dichtprinzip mit dem ersten u-förmigen Ringkanal 9 identisch sind.

In den zweiten u-förmigen Ringkanal 11 ragt das Gleitsegment 21. Das Gleitsegment 21 mit den Gleitflächen 22 und 23 ist am Statorring 2 befestigt und öffnet die kreisringförmigen Dichtungen 19 und 20 mit der ersten Gleitfläche 22 und der zweiten Gleitfläche 23. Die Gleitflächen 22 und 23 dichten auf der gesamten Länge des Gleitsegmentes 21 gegenüber den kreisringförmigen Dichtungen 19 und 20. An den beiden Enden des Gleitsegmentes 21 dichten wieder die kreisringförmigen Dichtungen 19 und 20 gegenseitig. Die radiale Bohrung 24 im Gleitsegment 21 stellt die Verbindung zwischen dem fahrzeugseitigen Anschluss 25 des Statorrings 2 und dem radseitigen Anschluss 26 des Rotorrings 3 dar. Der erste u-förmige Ringkanal 9 ist ebenso wie der zweite Ringkanal 11 mit einem Gleitsegment 21 ausgerüstet. Das Gleitsegment 21 des ersten u-förmigen Ringkanals 9 ist gegenüber dem Gleitsegment 21 des zweiten u-förmigen Ringkanal 11 um 180 Grad versetzt angeordnet und ist in Figur 1 nicht dargestellt.

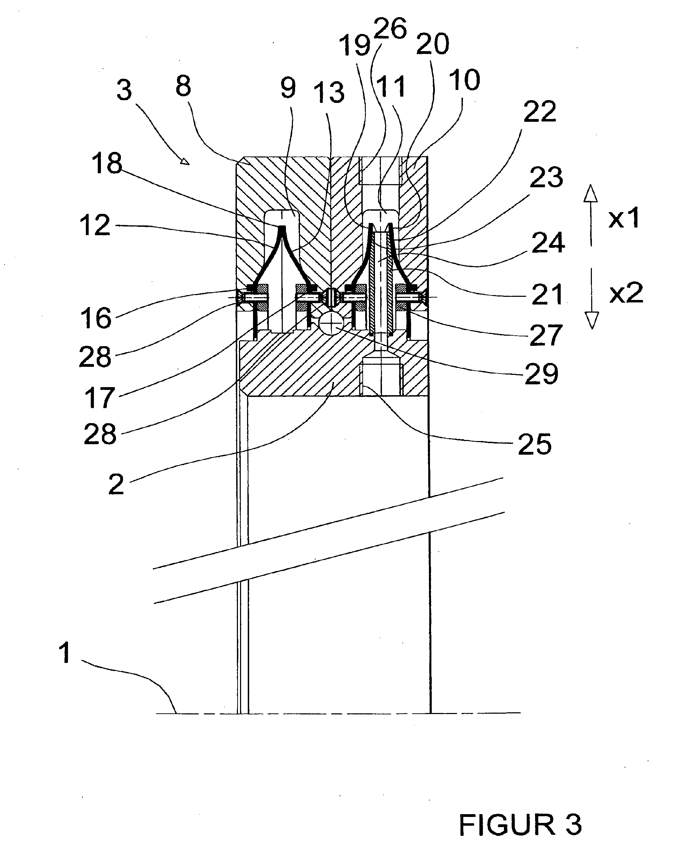

Gemäß einer besonderen, nicht dargestellten Ausführungsform ist die hier beschriebene Drehdurchführung zur Reduzierung des Reibmomentes beim drucklosen Leerlaufbetrieb mit einem radial in Richtung x1 und x2 beweglichen Gleitsegment 21 ausgestattet. In diesem Fall sind die Gleitsegmente radial beweglich geführt. Bezüglich der Darstellungen gemäß der Fig. 1 und 3 lässt sich das Gleitsegment 21 in Richtung x2 in eine zurückgezogene Position bewegen. Befindet sich das Gleitsegment 21 in der zurückgezogenen Position, hat das Gleitsegment keine Berührung mit den Dichtungen 12, 13 bzw. 19, 20. Das entsprechende Reibmoment wäre im Leerlauf damit gleich Null. Beim Start des Reifendruckverstellvorgangs ist das Gleitsegment 21 aus der zurückgezogenen Position in Richtung x1 in die ausgefahrene Position zwischen die beiden Dichtungen bewegbar und stellt die Betriebsbereitschaft her. Die ausgefahrene Position ist in den Fig. 1 und 3 bei dem u-förmigen Ringkanal 11 dargestellt.

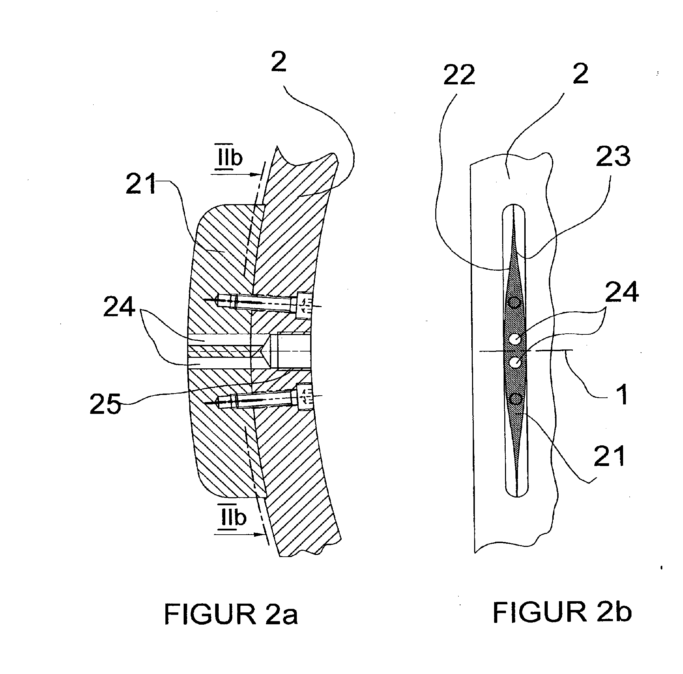

**In** **Figur 2a** ist das Gleitsegment 21 in einem Schnitt senkrecht zu Drehachse 1 dargestellt. Das Gleitsegment 21 ist mit dem Statorring 2 verschraubt. Die **Figur 2b** ist eine Ansicht gemäß Schnittlinie IIb - IIb in Fig. 2a radial auf die Drehachse und zeigt das Profil des bevorzugten Gleitsegmentes 21 mit den Gleitflächen 22 und 23, die ein Öffnen und Schließen der kreisringförmigen Dichtungen 12 und 13 bzw. 19 und 20, unter Wahrung der Dichtfunktion sicherstellen. Die Bohrungen 24 bilden die Verbindung zum fahrzeugseitigen Anschluss 25 des Statorrings 2. Die kreisringförmigen Dichtungen 12, 13, 19 und 20 sind nur in Figur 1 dargestellt.

**In** **Figur 3** ist im Unterschied zu Figur 1 eine bevorzugte, alternative Befestigung der kreisringförmigen Dichtungen 12, 13, 19 und 20 dargestellt. Hier werden die kreisringförmigen Dichtungen 12, 13, 19 und 20 mit je einem Klemmring 27 an den ersten u-förmigen Ringkanal 9 bzw. den zweiten u-förmigen Ringkanal 11 geklemmt. Die Klemmkräfte werden mit Schrauben 28 aufgebracht. Mit der Klemmung erhält die kreisringförmige Dichtung die funktionsgerechte Form und Position. Durch die gezeigte Anordnung der kreisringförmigen Dichtungen ist es möglich, mit diesen Dichtungen die Lagerung vor Schmutz zu schützen, wenn, wie dargestellt, nur ein zentral angeordnetes Wälzlager 29 verwendet wird.

### STÜCKLISTE

- **1**: Drehachse der Drehdurchführung
- **2**: Statorring
- **3**: Rotorring
- **4**: 1.Wälzlager
- **5**: 2.Wälzlager
- **6**: 1. Seitenscheibe
- **7**: 2. Seitenscheibe
- **8**: 1. Ring
- **9**: 1. u-förmiger Ringkanal
- **10**: 2. Ring
- **11**: 2. u-förmiger Ringkanal
- **12**: 1. kreisringförmige Dichtung
- **13**: 2. kreisringförmige Dichtung
- **14**: 1. Haltering
- **15**: 2. Haltering
- **16**: 1. O-Ring
- **17**: 2. O-Ring
- **18**: Bereich zwischen der 1. und 2. kreisringförmigen Dichtung
- **19**: 3. kreisringförmige Dichtung
- **20**: 4. kreisringförmige Dichtung
- **21**: Gleitsegment
- **22**: 1. Gleitfläche
- **23**: 2. Gleitfläche
- **24**: Bohrung
- **25**: fahrzeugseitiger Anschluss
- **26**: radseitiger Anschluss
- **27**: Klemmring
- **28**: Schraube
- **29**: Wälzlager

## Patentansprüche

1. Drehdurchführung für Radfahrzeuge, insbesondere für einen Traktor, mit einer Reifendruckverstellanlage für mindestens ein Rad, welchem koaxial die Drehdurchführung zugeordnet ist, die Drehdurchführung einen Statorring (2), der relativ zum Fahrzeugkörper nicht drehbar angeordnet ist und einen Rotorring (3), der gegenüber dem Statorring (2) drehbar gelagert ist und der, mit dem der Drehdurchführung zugeordneten Rad des Fahrzeugs verbunden ist, umfasst und sowohl der Statorring (2) als auch der Rotorring (3) je mindestens eine Anschlussleitung besitzen (25 und 26), wobei der erste Ring, entweder der Statorring (2) oder der Rotorring (3), mindestens einen Ringkanal (9) mit einem u-förmigen Querschnitt aufweist, wobei der Ringkanal eine ringförmige Öffnung aufweist, welche durch den Kontakt freier Enden einer Dichtvorrichtung abgedichtet ist, wobei an beiden Seiten der Öffnung je mindestens eine kreisringförmige Dichtung (12 und 13) der Dichtvorrichtung befestigt ist, welcher das freie Ende zugeordnet ist, **gekennzeichnet dadurch, dass** der zweite Ring, entweder der Rotorring (3) oder der Statorring (2), mindestens ein Gleitsegment (21) besitzt, welches wesentlich in Umfangsrichtung der Drehdurchführung dichtend mit den beiden kreisringförmigen Dichtungen (19 und 20) in gleitfähiger Verbindung steht, oder lösbar in gleitfähigem Kontakt mit den beiden kreisringförmigen Dichtungen (19 und 20) bewegbar ist, die kreisringförmigen Dichtungen nur innerhalb eines Segmentes des Umfangs der beiden kreisringförmigen Dichtungen (19 und 20) voneinander abhebt, das Gleitsegment (21) eine Bohrung (24) aufweist, die eine Verbindung zwischen dem Anschluss (26) am Rotorring (3) und dem Anschluss (25) am Statorring (2) ermöglicht.

2. Drehdurchführung nach Anspruch 1, **gekennzeichnet dadurch, dass** die kreisringförmigen Dichtungen (12, 13, 19, 20) aus einem Halbzeug gefertigt sind.

3. Drehdurchführung nach Anspruch 2, **gekennzeichnet dadurch, dass** die kreisringförmigen Dichtungen (12, 13, 19, 20) aus Kunststoff bestehen.

4. Drehdurchführung nach Anspruch 1, **gekennzeichnet dadurch, dass** die kreisringförmigen Dichtungen (12, 13, 19, 20) jeweils an deren Innen- oder deren Außendurchmesser in einem u-förmigen Querschnitt des Haltering an je einem Haltering (14,15) befestigt sind und zwei Halteringe an je einem Ringkanal (9,11) fixiert werden.

5. Drehdurchführung nach Anspruch 1, **gekennzeichnet dadurch, dass** mindestens eine der kreisringförmigen Dichtungen (12, 13, 19, 20) mit einem Klemmring (27) am Ringkanal (9,11) geklemmt wird und die Klemmkraft mit mindestens einer Schraube (28) erzeugt wird.

6. Drehdurchführung nach Anspruch 1, **gekennzeichnet dadurch, dass** das Gleitsegment (21) aus Kunststoff besteht.

7. Drehdurchführung nach Anspruch 1, **gekennzeichnet dadurch, dass** das Gleitsegment (21) zwischen zwei radial unterschiedlichen Positionen wesentlich radial verschiebbar mit dem zweiten Ring verbunden ist, einer ersten Position ohne einen Kontakt mit den kreisringförmigen Dichtungen und einer zweiten Position mit dem Kontakt zwischen den kreisringförmigen Dichtungen (12, 13, 19, 20) und dem Gleitsegment (21).

## Claims

1. Rotary union for wheeled vehicles, in particular for a tractor, having a tyre pressure adjusting system for at least one wheel, to which the rotary union is coaxially assigned, the rotary union comprises a stator ring (2) arranged non-rotatably relative to the vehicle body and a rotor ring (3) mounted rotatably with respect to the stator ring (2) and connected to the vehicle wheel assigned to the rotary union, and both the stator ring (2) and the rotor ring (3) each possess at least one connecting line (25 and 26), the first ring, either the stator ring (2) or the rotor ring (3), having at least one ring channel (9) with a u-shaped cross-section, the ring channel having a ringshaped opening which is sealed off by the contact of free ends of a sealing device, there being fastened to both sides of the opening at least one respective annular seal (12 and 13) of the sealing device, to which the free end is assigned, **characterised in that** the second ring, either the rotor ring (3) or the stator ring (2), possesses at least one sliding segment (21) which is, substantially in the circumferential direction of the rotary union, sealingly in slidable connection with the two annular seals (19 and 20), or is releasably movable in slidable contact with the two annular seals (19 and 20), lifts off the annular seals (19 and 20) from one another only within a segment of the circumference of the two annular seals (19 and 20), the sliding element (21) has a bore (24) which enables a connection between the connection (26) on the rotor ring (3) and the connection (25) on the stator ring (2).

2. Rotary union according to Claim 1, **characterised in that** the annular seals (12, 13, 19, 20) are produced from a semi-finished product.

3. Rotary union according to Claim 2, **characterised in that** the annular seals (12, 13, 19, 20) are made of plastic.

4. Rotary union according to Claim 1, **characterised in that** the annular seals (12, 13, 19, 20) are each fastened at their inner or outer diameter in a u-shaped cross-section of the holding ring to respectively one holding ring (14, 15) and two holding rings are fixed to respectively one ring channel (9, 11).

5. Rotary union according to Claim 1, **characterised in that** at least one of the circular seals (12, 13, 19, 20) is clamped to the ring channel (9, 11) by a clamping ring (27) and the clamping force is produced by at least one screw (28).

6. Rotary union according to Claim 1, **characterised in that** the sliding segment (21) is made of plastic.

7. Rotary union according to Claim 1, **characterised in that** the sliding segment (21) is connected to the second ring so as to be substantially radially displaceable between two radially different positions, a first position without a contact with the annular seals and a second position with the contact between the annular seals (12, 13, 19, 20) and the sliding segment (21).

## Revendications

1. Passage tournant pour des véhicules à roues, en particulier pour un tracteur, avec une installation de réglage de la pression des pneus pour au moins une roue, à laquelle est associé coaxialement le passage tournant, le passage tournant comprend une bague de stator (2) qui n'est pas disposée par rapport au corps du véhicule de manière rotative et une bague de rotor (3), qui est disposée face à la bague de stator (2) de manière rotative et qui est reliée à la roue, associée au passage tournant, du véhicule, et aussi bien la bague de stator (2) que la bague de rotor (3) possèdent respectivement au moins une conduite de liaison (25 et 26), la première bague, soit la bague de stator (2), soit la bague de rotor (3), présentant au moins un canal annulaire (9) avec une section transversale en forme de U, le canal annulaire présentant une ouverture en forme annulaire, laquelle est étanchée par le contact des extrémités libres d'un dispositif d'étanchéité, au moins une étanchéité en forme circulaire (12 et 13) du dispositif d'étanchéité étant fixée au niveau des deux côtés de l'ouverture, auquel est associée l'extrémité libre, **caractérisé en ce que** la deuxième bague, soit la bague de rotor (3), soit la bague de stator (2), possède au moins un élément de glissement (21), lequel est en relation coulissante, essentiellement dans la direction circonférentielle du passage tournant, étanchant avec les deux étanchéités en forme circulaire (19 et 20), ou peut être déplacé de manière amovible en contact glissant avec les deux étanchéités en forme circulaire (19 et 20), qui soulève l'une de l'autre les étanchéités en forme circulaire uniquement au sein d'un segment de la circonférence des deux étanchéités en forme circulaire (19 et 20), le segment de glissement (21) présente un alésage (24) qui permet une liaison entre le raccord (26) au niveau de la bague de rotor (3) et le raccord (25) au niveau de la bague de stator (2).

2. Passage tournant selon la revendication 1, **caractérisé en ce que** les étanchéités en forme circulaire (12, 13, 19, 20) sont fabriquées à partir d'un produit semi-fini.

3. Passage tournant selon la revendication 2, **caractérisé en ce que** les étanchéités en forme circulaire (12, 13, 19, 20) sont en matière plastique.

4. Passage tournant selon la revendication 1, **caractérisé en ce que** les étanchéités en forme circulaire (12, 13, 19, 20) sont fixées respectivement au niveau de leur diamètre extérieur ou de leur diamètre intérieur, dans une section transversale en forme de U de la bague de retenue au niveau de chaque bague de retenue (14, 15) et **en ce que** deux bagues de retenue sont fixées au niveau d'un canal annulaire (9, 11).

5. Passage tournant selon la revendication 1, **caractérisé en ce qu'**au moins une des étanchéités en forme circulaire (12, 13, 19, 20) est serrée avec une bague de serrage (27) au niveau du canal annulaire (9, 11) et **en ce que** la force de serrage est produite avec au moins une vis (28).

6. Passage tournant selon la revendication 1, **caractérisé en ce que** le segment de glissement (21) est en matière plastique.

7. Passage tournant selon la revendication 1, **caractérisé en ce que** le segment de glissement (21) est relié à la deuxième bague essentiellement de manière mobile radialement entre deux positions différentes radiales, une première position sans contact avec les étanchéités en forme circulaire et une deuxième position avec contact entre les étanchéités en forme circulaire (12, 13, 19, 20) et le segment de glissement (21).
